# FASCICULE DE BREVET EUROPEEN

(11) **EP 2 967 114 B1**
(45) Date de publication et mention de la délivrance du brevet: **02.05.2018**
(21) Numéro de dépôt: 14713269.0
(22) Date de dépôt: 11.03.2014
(51) Int. Cl.: A23G 4/06

(54) **PROCÉDÉ POUR AMÉLIORER LES PROPRIÉTÉS ORGANOLEPTIQUES DE GOMME À MÂCHER SANS SUCRES À BASE DE SORBITOL**
VERFAHREN ZUR VERBESSERUNG DER ORGANOLEPTISCHEN EIGENSCHAFTEN VON ZUCKERFREIEM KAUGUMMI AUF SORBITOLBASIS
METHOD FOR IMPROVING THE ORGANOLEPTIC PROPERTIES OF SORBITOL-BASED SUGAR-FREE CHEWING GUM

(30) Priorité: 12.03.2013 FR 1300549
(43) Date de publication de la demande: 20.01.2016
(73) Titulaire: Tereos Starch & Sweeteners Belgium, 9300 Aalst (BE)
(72) Inventeur: CAMUEL, Nadia, F-67390 Marckolsheim (FR); BENSOUISSI, Adbelfattah, B-9300 Aalst (BE)
(74) Mandataire: Chielens, Kristof
(86) Numéro de dépôt international: PCT/IB2014/059623
(87) Numéro de publication internationale: WO 2014/141061

(56) Documents cités:
- EP-A1- 0 669 130
- EP-A1- 1 008 602
- EP-A1- 1 481 593
- WO-A1-88/06845
- WO-A1-93/05662
- WO-A1-95/08273
- FR-A1- 2 451 357
- FR-A1- 2 949 296
- US-A- 3 330 874
- US-A- 4 959 226
- US-A- 4 976 972

## Description

La présente invention se rapporte à un procédé pour améliorer les propriétés organoleptiques de gommes à mâcher sans sucres à base de sorbitol, telles que la dureté d'attaque, la perception de la saveur sucrée et l'intensité aromatique.

Les compositions de gomme à mâcher comprennent généralement une gomme de base, un édulcorant en poudre, des humectants et un agent aromatisant, de même que d'autres ingrédients facultatifs tels que des plastifiants, des charges, des couleurs, ... etc. Lorsque les compositions de chewing-gum sont formulées sans sucres, alors la grande majorité comprend du sorbitol. Ce sorbitol est incorporé sous forme de poudre. Le sorbitol joue alors le rôle d'un édulcorant sans sucres et d'un agent de charge.

Il est bien connu que les caractéristiques de la poudre de sorbitol utilisée ont un effet sur l'aptitude à traiter la gomme de base lors de la fabrication. Ainsi la tendreté et la souplesse sont nécessaires pendant le processus d'extrusion / laminage. D'autre part, lorsque la gomme à mâcher est découpée en tablettes, la gomme ne doit pas être trop molle ou collante, ceci afin d'éviter des difficultés lors de la découpe et l'emballage.

Des méthodes pour optimiser la texture et la processabilité des compositions de gomme à mâcher sans sucres contenant du sorbitol ont déjà été décrites dans le passé. Un tel procédé est décrit dans WO 88/06845, où au moins deux types de sorbitol en poudre sont utilisés dans la formulation de compositions de gomme. Le rapport entre les deux types de sorbitol en poudre est varié entre les échantillons de composition différente afin d'optimiser la texture et l'aptitude à traiter la gomme de base. En faisant varier le rapport entre les deux types de sorbitol, des améliorations dans le traitement et la texture de la gomme pouvaient être obtenues. Il faut noter que ces poudres de sorbitol contiennent jusqu'à 75% de fines particules. Ainsi, les mélanges de poudres de sorbitol proposés sont susceptibles de contenir des taux de fines particules élevés responsables lors de la fabrication du chewing-gum, d'une augmentation de la viscosité de la gomme et du temps de mélange de la gomme avec le sorbitol.

Dans une autre publication, EP 0 725 567, l'influence de la sélection des tailles de particules spécifiques de sorbitol, sur la tendreté ou sur la dureté d'une gomme à mâcher au cours de la transformation est discuté. Ainsi des poudres de sorbitol, disponibles dans le commerce, ont été tamisées de sorte que les particules supérieures à 177 microns ont été éliminées dans une large mesure. Ainsi, une gomme à mâcher plus ferme, et avec une stabilisation plus rapide serait obtenue, en conservant une gomme qui reste suffisamment élastique pour être laminée. Selon EP 0 725 567, la fermeté accrue contribuerait ainsi à accroître l'efficacité de production et d'emballage de gommes à mâcher tendres. Cependant, les poudres de sorbitol décrites dans ce document étant des poudres avec un taux élevé en fines particules, elles sont également responsables d'un temps de mélange important à fort cisaillement lors de la préparation des chewing-gums.

En plus d'avoir un effet sur les paramètres de traitement, il est également reconnu dans WO 88/06845, que la libération et la perception du goût sucré d'une formulation de gomme peuvent également être modifiées à l'aide de ces mélanges. Les plus petites particules se dissolvent plus rapidement, développent un goût sucré immédiat. La libération d'agents aromatisants est également affectée par la libération de la saveur sucrée. Néanmoins, un taux important de fines particules peut être également perceptible dans le chewing-gum et entrainer une augmentation de la fermeté du chewing-gum en bouche, ce qui peut s'avérer désagréable.

US 4,959,226 A, décrit un procédé d'optimisation de la texture et de la capacité de traitement des compositions de gomme à mâcher. Le procédé comprend les étapes consistant à fabriquer un échantillon de gomme à mâcher contenant du sorbitol en poudre, en faisant en sorte que les lots de gomme suivants utilisent également du sorbitol alimenté, en utilisant au moins deux types de sorbitol en poudre dans un ou plusieurs des lots d'échantillons et en faisant varier le rapport entre au moins deux types de sorbitol en poudre entre les lots d'échantillons afin d'optimiser la texture et la capacité de traitement de la gomme. Les types de sorbitol en poudre peuvent différer dans leur distribution granulométrique ou leur morphologie particulaire.

Il y a donc un besoin d'une poudre de sorbitol ayant une répartition granulométrique qui permette à la fois d'augmenter la rapidité de mélange du sorbitol avec la gomme base mais également qui permette d'améliorer les qualités organoleptiques du chewing-gum tout en maintenant ses qualités texturales.

L'évaluation de chewing-gum est difficile par rapport aux autres produits alimentaires, car elle implique des changements dans les goûts et les textures au cours de la période de dégustation. Dans le livre "Formulation and Production of Chewing and Bubble Gum" par Fritz, Douglas (ISBN 0904725103), on décrit un procédé pour évaluer la gomme à mâcher qui prend en compte les différentes phases de mastication, et différents paramètres qui ont leur importance au cours de ces différentes phases.

Cette méthode est considérée la plus fiable dans la description des différents aspects organoleptiques de la gomme à mâcher lors de sa consommation. Par conséquent, cette méthode est utile pour reconnaître les lacunes potentielles de certaines formulations de gomme.

Aujourd'hui, les compositions de chewing-gum sans sucres, contenant du sorbitol comme polyol majeur, sont fabriquées en utilisant des poudres de sorbitol ayant une granulométrie moyenne d'environ 200 microns, tel que mentionné dans «Formulation and Production of Chewing and Bubble Gum » par Fritz, Douglas p.142.

Cette application est basée sur les observations faites lors de l'évaluation des poudres standards de sorbitol utilisées dans la préparation de gomme à mâcher sans sucres. Bien que la taille moyenne des particules de ces poudres se situe à environ 200 microns, il a été observé qu'il est possible néanmoins, de constater une forte variation dans la distribution de taille des particules de ces poudres.

Par ailleurs, les inventeurs ont montré que la distribution de ces particules influent à la fois sur la rapidité et la facilité de mélange du sorbitol avec la gomme base mais également sur la saveur, la texture et le ressenti de l'arôme du chewing-gum obtenu. En effet, il a été a mis en évidence par la présente, qu'une poudre de sorbitol ayant un taux de fines particules trop élevé rend le mélange de la gomme base avec la poudre de sorbitol particulièrement difficile et long alors qu'une quantité trop réduite influe négativement sur la qualité gustative du chewing-gum. Pour la première fois, de telles observations ont été effectuées à partir de différences de taux de fines particules très réduit entre des poudres ayant des profils granulométriques comparables.

Ainsi, il a été découvert d'une façon surprenante qu'une répartition granulométrique particulière, bien que la taille moyenne des particules reste environ 200 microns, a un effet considéré comme positif, sur un certain nombre de propriétés de la gomme à mâcher tout en maintenant les autres caractéristiques gustatives du chewing-gum et en réduisant le temps de mélange de la gomme base pour l'obtention du chewing-gum. Les propriétés particulières suivantes ont été influencées positivement:
- la dureté d'attaque (*initial bite*) au cours de la phase initiale à mâcher, qui est devenue un peu plus ferme;
- la texture, qui est devenue plus lisse ;
- la perception de la saveur sucrée et de l'intensité aromatique pendant la phase intermédiaire ;
- un effet rafraichissant amélioré, lorsque aromatisé avec de la menthe.

Aussi il a été observé qu'il y a un besoin non-réalisé à préparer de nouvelles gommes à mâcher montrant de tels effets.

Sur la base de ces résultats, la présente invention est définie comme étant une poudre de sorbitol ainsi que son utilisation pour améliorer les propriétés organoleptiques de la gomme à mâcher sans sucres, en particulier la dureté d'attaque, la texture, le goût sucré et l'intensité aromatique, la poudre de sorbitol ayant une distribution de taille des particules, préférentiellement déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids.

Par « *gomme à mâcher* » on entend une composition comprenant une partie insoluble constituée par la gomme base et une partie soluble comprenant au moins un polyol ou un mélange de polyols parmi lesquels une poudre de sorbitol selon l'invention.

Différentes formules de gommes à mâcher ainsi que leur mode d'obtention sont largement décrits dans l'art antérieur et notamment dans «Formulation and Production of Chewing and Bubble Gum » par Fritz, Douglas p.142. De façon générale, les gommes à mâcher sont obtenues par une adjonction séquentielle des différents ingrédients du chewing-gum (∼15-20 minutes) dans un malaxeur du marché bien connu de l'homme du métier, par exemple un malaxeur double enveloppe permettant un contrôle fin de la température de sorte à permettre un assouplissement de la gomme base et une régulation de la température de la masse de chewing-gum par exemple à 50°C durant le procédé d'obtention de la gomme à mâcher.

Plus particulièrement, on entend par « *composition de gomme à mâcher* » une composition comprenant une gomme base et optionnellement, un agent de charge tel qu'un édulcorant ou un polyol (ou sucre alcool) choisi parmi le sorbitol, le maltitol, le xylitol, le lactitol, l'érythritol, l'isomalt ou leur mélange, au moins un agent plastifiant notamment choisi parmi un sirop de polyol, la glycérine, la lécithine ou leur mélange, et au moins un arôme.

On entend par « *agent de charge* » un édulcorant ou un polyol, préférentiellement, un mélange de polyols tel que le sorbitol et le xylitol, le sorbitol et le maltitol ou le sorbitol et le mannitol.

On entend par « *gomme à mâcher* » une composition comprenant une gomme base, un agent de charge tel qu'un édulcorant ou un polyol (ou sucre alcool) par exemple, choisi parmi le sorbitol, le maltitol, le xylitol ou leur mélange, au moins un agent plastifiant notamment choisi parmi un sirop de polyol, la glycérine, la lécithine ou leur mélange, et au moins un arôme. Préférentiellement, la gomme à mâcher comprend, une gomme base et la poudre de sorbitol selon l'invention.

Préférentiellement, la gomme à mâcher est sans sucre.

Il a été démontré dans la présente demande, que la poudre de sorbitol selon l'invention permet d'améliorer les propriétés organoleptiques des gommes à mâcher. Par « *propriété organoleptique* » on entend dans la présente invention, de l'ensemble des facteurs sensoriels que sont le goût, l'aromatisation et la texture. Plus particulièrement, on entend la une dureté d'attaque, la texture, la puissance aromatique (ou intensité aromatique), l'intensité sucrée et l'effet rafraichissant.

Par « dureté d'attaque », on entend la force nécessaire pour la pénétration des dents à travers le chewing-gum au moment de la mise en bouche c'est-à-dire pendant les premières secondes de consommation.

Par « *intensité aromatique* » on entend la sensation d'un arôme perçu par voie rétro-olfactive. L'intensité mesure la puissance ou la faiblesse d'un arôme pendant la mastication du chewing-gum. Une gomme à mâcher ayant une puissance aromatique trop forte sera considérée comme "brûlant la langue", alors qu'une intensité trop faible confère une sensation de "manque d'arôme".

Par « *texture* » de la gomme à mâcher, on entend la perception en bouche de l'aspect lisse à granuleux de la gomme à mâcher lorsque le chewing-gum hydraté par la salive stimule les récepteurs sensoriels situés sur la langue.

La répartition granulométrique de la poudre selon l'invention peut être mesurée à l'aide d'une tamiseuse RETSCH, modèle AS200 control 'g' selon les recommandations du constructeur. L'utilisation de cet équipement Retsch pour pratiquer ces analyses est bien documentée par le constructeur et dans la littérature. Plus particulièrement, les poudres de sorbitol peuvent être caractérisées de la façon suivante : 100g de chacune des poudres sont additionnés de 1g d'agent d'écoulement libre « Free flowing agent » tel que de la silice (SIPERNAT® 22 S). La masse homogénéisée est tamisée par ledit-équipement avec une amplitude d'oscillation de 1,5mm pendant 10 minutes. Les différents tamis utilisés (de 400, 250, 100 et 75 microns) selon cette méthode sont certifiés (ISO 3310-1). Chaque tamis est ensuite pesé afin de mesurer le poids de chacune des fractions granulométriques et calculer une répartition granulométrique en pourcentages.

Dans un mode de réalisation préféré, la répartition des tailles de particules, tel que déterminé par analyse granulométrique, utilisant un équipement Retsch, est comme suit:
- de 0 à 1% en poids, de particules > 400 microns,
- de 41 à 44% en poids, de particules comprises entre 250 et 400 microns,
- de 49 à 52% en poids, de particules comprises entre 100 et 250 microns,
- de 4 à 6% en poids, de particules comprises entre 75 et 100 microns et,
- de 0 à 1,5% en poids, de particules < 75 microns, dont la somme des différentes fractions étant de 100% en poids.

Les poudres de sorbitol aptes à être utilisées selon l'invention sont obtenues par broyage et / ou tamisage d'un matériau sorbitol cristallin. Les procédés de broyage et de tamisage sont bien connus de l'homme du métier. Plus particulièrement, la poudre de sorbitol selon l'invention peut être obtenue en broyant puis en tamisant une poudre cristalline de sorbitol. Le tamisage s'effectue préférentiellement successivement sur des tamis de 800 et 400 microns. Les particules retenues sur les tamis sont à nouveau broyées puis tamisées afin d'obtenir la répartition granulométrique souhaitée. Les fines particules peuvent être éliminées par définage généralement par lit fluidisé. Le broyeur utilisé peut être à pale, à marteau ou à broche. Les tamis utilisés peuvent être centrifuges ou vibrants.

Un exemple de poudre de sorbitol pouvant permettre l'obtention de la poudre selon l'invention par broyage et/ou tamisage est une poudre obtenue à partir d'un sirop de sorbitol par extrusion, atomisation ou agglomération. De telles poudres sont largement décrites dans l'art antérieur par exemple GB 2 046 743 ou EP 1 008 602. Un tel procédé de broyage et de tamisage d'un sorbitol cristallin obtenu par extrusion ou pan-agglomération est par exemple décrit dans les documents EP 0 669 130 et GB 2 046 743.
L'invention concerne de plus, une méthode pour améliorer les propriétés organoleptiques d'une gomme à mâcher sans sucres ou pour réduire la teneur en arôme d'une gomme à mâcher comprenant les étapes consistant à :
- ajouter à une composition de gomme à mâcher au moins une poudre de sorbitol présentant une distribution de taille des particules, déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids, et
- obtenir de la gomme à mâcher.

L'invention porte également sur une méthode de production d'une gomme à mâcher sans sucres comprenant les étapes consistant à :
- mélanger une gomme base avec une poudre de sorbitol ayant une distribution de taille des particules, déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids, et
- optionnellement, ajouter l'un quelconque des éléments choisis parmi un agent plastifiant, un agent de charge, un humectant, un arôme et leur mélange.

Préférentiellement, la méthode de production d'une gomme à mâcher comprend de plus, une étape d'extrusion de la composition de gomme à mâcher, une étape de saupoudrage, une étape de laminage et une étape de formage découpage. L'invention concerne également une gomme à mâcher obtenue par la mise en oeuvre de la méthode selon l'invention.
L'invention concerne également une gomme à mâcher sans sucres comprenant la poudre de sorbitol selon l'invention, ladite gomme à mâcher présentant préférentiellement, une teneur réduite en arôme.

Une gomme à mâcher préférée selon l'invention comprend 2 à 85% % (w/w), de préférence, 5 à 84%, 10 à 80%, 15 à 75%, 20 à 70%, 25 à 65%, 30 à 60%, 45 à 55% (w/w) de poudre de sorbitol selon l'invention.
Typiquement, une gomme à mâcher selon l'invention peut comprendre :
- 20-35% en poids, préférentiellement 25-30% de gomme base ;
- 5 à 25% en poids, préférentiellement 10-15%, d'agent plastifiant et
- 0,5-10% en poids préférentiellement 0,7 à 9% ; 1 à 8% ; 1,5 à 7% ; 2 à 6% ; 4 à 5 % (w/w) d'arôme.

La gomme base peut être toute gomme base disponible dans le commerce et adaptée à la préparation de chewing-gums par exemple la gomme base commercialisée par CAFOSA GUM S/A sous l'appellation GEMINIS-T.
La gomme à mâcher peut comprendre en plus de la poudre de sorbitol selon l'invention, un sirop de polyol, préférentiellement un sirop de maltitol.
Typiquement, la gomme à mâcher selon l'invention comprend de la gomme base, de la poudre de sorbitol selon l'invention, un sirop préférentiellement de maltitol, optionnellement une poudre de xylitol et/ou de maltitol.

Préférentiellement, la gomme à mâcher selon l'invention peut comprendre :
- de 20 à 35% (w/w) de gomme base,
- 2 à 77% (w/w) de poudre de sorbitol selon l'invention,
- 3 à 15% (w/w) de sirop de polyol préférentiellement de sirop maltitol,
- optionnellement une poudre de xylitol et/ou de maltitol, plus particulièrement, 3 à 15% (w/w) de poudre de xylitol et/ou de maltitol.

### EXEMPLE

L'évaluation organoleptique des gommes à mâcher contenant des poudres de sorbitol citées ci-dessus a été réalisée en utilisant la méthode d'évaluation de la gomme à mâcher comme décrit à la p. 81 et 85 du livre "Formulation and Production of Chewing and Bubble Gum" (ISBN = 0904725103).

La composition de chewing-gum de test est représentée dans le tableau 1:

**Tableau 1 : Compositions des gommes à mâcher.**

| **Ingrédients chewing**-**gum** | **Quantité (g/100g)** |
|---|---|
| Sorbitol en poudre | 54,2 |
| Xylitol en poudre | 4,8 |
| Base de gomme Cafosa Geminis-T | 30,7 |
| Maltitol poudre | 3,3 |
| Sirop de maltitol (MS : 80%) | 7,0 |
| Arôme menthe Mane | qsp |

Différentes poudres de sorbitol ont été testées montrant une distribution granulométrique telle que représentée dans le tableau 2:

**Tableau 2 : Distribution de taille des particules des échantillons évalués.**

| **Taille des particules** | **Référenc e** | **Tamisé 1** | **Tamisé 2** | **Produit commercial** | **Tamisé 3** |
|---|---|---|---|---|---|
| > 400 µ | 0,9 | 0,9 | 0,6 | 7 | 1,4 |
| 250 - 400 µ | 28,7 | 42,8 | 43,6 | 26 | 50,5 |
| 100 - 250 µ | 53,8 | 51,1 | 50,3 | 49,7 | 44,3 |
| 75 - 100 µ | 10,8 | 4,7 | 4,1 | 10,4 | 3,1 |
| < 75 µ | 5,8 | 0,5 | 1,4 | 6,9 | 0,8 |

Référence : MERISORB® 200 commercialisé par TEREOS SYRAL.
Produit commercial : NEOSORB P60W commercialisé par ROQUETTE FRERES.

L'analyse de la répartition granulométrique des poudres est effectuée à l'aide d'une tamiseuse RETSCH, modèle AS200 control 'g' conformément aux instructions du constructeur. Plus particulièrement, de la façon suivante : 100g de chacune des poudres sont additionnés de 1g de silice (SIPERNAT® 22S). La masse homogénéisée est tamisée par ledit-équipement avec une amplitude d'oscillation de 1,5mm pendant 10 minutes. Chaque tamis est ensuite pesé afin de mesurer le poids de chacune des fractions granulométriques et calculer une répartition granulométrique en pourcentages.

Lors de la fabrication des chewing-gums, il a été remarqué que comparativement à la poudre de référence et à celle du marché, les tamisés 1 et 2 permettent une réduction du temps de mélange de la composition dans le mélangeur à chewing-gums. Ceci constitue un avantage des tamisés 1 et 2 selon l'invention comparativement à l'ensemble des poudres testées.

Une fois les chewing-gums obtenus, les critères portant sur l'apparence du chewing-gum (surface lisse sans trou, arrêtes bien définies) ont été mesurés. Les résultats observés sont similaires entre les tamisés, la poudre de référence ainsi que la poudre commerciale.

L'évaluation sensorielle des chewing-gums a fait l'objet d'un protocole strict mis en oeuvre par un panel spécifiquement entraîné pour la dégustation des chewing-gums. Le protocole de dégustation de chewing-gums est documenté, il est plus particulièrement décrit dans « Formulation and production of chewing and bubble gum » de Douglas Fritz (Kennedys Books Ltd) - Hardcover (2008). Ce protocole s'organise en 3 phases.

La phase initiale correspond à l'attaque en bouche pendant les 10 premières secondes de dégustation; la phase intermédiaire jusqu'à 3 minutes, décrit précisément les propriétés sensorielles du chewing-gum en terme d'hydratation, de texture et de perception aromatique car c'est pendant cette période que la plupart des arômes et édulcorants sont extraits de la matrice. La phase finale au-delà de 3 minutes, caractérise le degré de stabilité des propriétés du chewing-gum dans le temps, en termes de consistance et perception aromatique principalement.

Les paramètres organoleptiques, ont été évalués par un panel entrainé, composé de 9 personnes.

Au cours de la phase initiale (10 premières secondes) sont évaluées, la dureté d'attaque, la cohésion, la vitesse de perception et l'intensité aromatique. Au cours de la phase intermédiaire (10 secondes à 3 minutes) sont évalués, l'hydratation (temps mis par la matrice pour absorber la salive), la cohésion, la texture, l'effet collant sur les dents, la puissance aromatique, l'intensité sucrée, et le pouvoir rafraichissant. Enfin, lors de la phase finale (3 à 6 minutes), sont évalués la dureté, la texture, le collant aux dents, la taille du chewing-gum en bouche, la forme en bouche (entre deux mastications), la consistance, la largeur du fil lorsque le chewing-gum est étendu, la puissance aromatique, l'intensité sucrée et enfin, le pouvoir rafraîchissant. Le système d'évaluation utilise un système à 5 points correspondant à cinq grades ou score pour chacun des descripteurs. L'ensemble des paramètres définis ci-dessus ont été testés (phase initiale, phase intermédiaire et finale). Les scores et l'ensemble des paramètres testés sont décrits dans la référence ci-dessus.

Lors de son analyse, le panel a relevé que parmi l'ensemble des paramètres mesurés de nombreux paramètres ont été maintenus par l'utilisation des tamisés comparativement aux poudres de référence et celle du marché.

Seuls les paramètres pour lesquels une différence est observée sont détaillés ci-après. Les scores pour les paramètres testés sont définis dans le système comme ci-dessous (Tableau 3).

Dans le tableau, P1 correspond à la phase initiale (10 premières secondes), et P2 à la phase intermédiaire (entre 10 secondes et 3 minutes):

**Tableau 3**

| | **Score** | **1** | **2** | **3** | **4** | **5** |
|---|---|---|---|---|---|---|
| P1 | Dureté d'attaque | Ferme | | normal | | tendre |
| P2 | Texture | Granuleux | | | | lisse |
| P2 | Puissance aromatique | Manque d'arôme | | normal | | brûle la langue |
| P2 | Intensité sucrée | Peu | | normal | | beaucoup |
| P2 | Pouvoir rafraichissant | peu | | normal | | beaucoup |

Les valeurs modifiées obtenues par le panel entrainé sont données dans le tableau 4.

**Tableau 4 : Evaluation organoleptique.**

| | **Référence** | **Tamisé 1** | **Tamisé 2** | **Produit commercial** | **Tamisé 3** |
|---|---|---|---|---|---|
| Dureté d'attaque | 3,1 | 2,3 | 2,4 | 3,7 | 2,4 |
| Texture | 3,2 | 3,5 | 3,5 | 3,0 | 2,7 |
| Puissance aromatique | 3,6 | 4,3 | 4,0 | 3,7 | 2,5 |
| Intensité sucrée | 3,0 | 3,3 | 3,4 | 3,2 | 2,9 |
| Effet rafraichissant | 3,3 | 4,0 | 3,7 | 3,4 | 2,5 |

Dans le cas des produits tamisés 1, 2 et 3, on observe une nette augmentation de la dureté d'attaque, dans la phase initiale (10 premières secondes) comparativement à la poudre de référence et à celle du marché.
Dans la phase intermédiaire (entre 10 secondes et 3 minutes) une intensification de la puissance aromatique, de l'intensité sucrée et de l'effet rafraichissant est observée pour les produits tamisés 1 et 2 mais pas du tamisé 3 comparativement à la poudre de référence et à celle du marché. L'effet de la distribution des particules, comme décrit dans le tableau 2, est net et clair.

Toutefois, il y a une limite à ce procédé de tamisage. Dans le cas où le produit est trop tamisé, comme dans le cas du tamisé 3, la dureté d'attaque reste identique, mais la perception aromatique, ainsi que l'effet rafraichissant, est clairement affectée d'une façon négative comparativement aux tamisés 1 et 2 mais plus encore comparativement à la référence ainsi qu'au produit commercial.
Ainsi, les tamisés 1 et 2 sont particulièrement avantageux en ce que l'amélioration de la puissance aromatique du chewing-gum par l'utilisation de ces poudres permet pour une même quantité de sorbitol dans le chewing-gum de réduire la quantité d'arome pour obtenir une perception aromatique identique.

Les tamisés 1 et 2 permettent également de ressentir un effet sucré plus important ainsi qu'un effet rafraîchissant plus important que les sorbitols de référence et du marché ce qui permet d'intensifier le gout du chewing-gum obtenu.

Il est ainsi démontré pour la première fois, l'effet de la répartition granulométrique des poudres de sorbitol sur la perception aromatique, l'intensité sucré et l'effet rafraîchissant du chewing-gum obtenu.

On remarquera également que la variation de la répartition granulométrique du tamisé 3 en plus de réduire la puissance aromatique, l'intensité sucrée ainsi que l'effet rafraichissant des sorbitols connus induit également une structure granuleuse du chewing-gum, ce qui n'est pas désiré puisque cette sensation est désagréable sur la langue.

Cet essai démontre également que la réduction de fines particules améliore certes les caractéristiques organoleptiques du chewing-gum mais que cette réduction de fines doit répondre à certains critères. Autrement dit, la poudre de sorbitol ne doit pas être excessivement définée pour que l'amélioration des caractéristiques organoleptiques du chewing-gum soit observée.

Ainsi, une différence très fine de granulométrie de la poudre de sorbitol conduit à des effets détectables sur le chewing-gum final quant au caractère granuleux du chewing-gum en bouche ou de la perception aromatique l'intensité sucré ou l'effet rafraîchissant (tamisé 1 ou 2 versus tamisé 3).

Plus spécifiquement, le présent exemple démontre que la poudre selon l'invention permet comparativement aux poudres de sorbitol du marché, i) de réduire les temps de mélange pour obtenir les chewing-gums comparativement aux produits de référence ii) d'obtenir un chewing-gum ayant une dureté d'attaque, une texture, une puissance aromatique, une intensité sucrée et un effet rafraichissant améliorés iii) tout en maintenant les caractéristiques du chewing-gum telles que la cohésion, la vitesse de perception, l'hydratation, la texture, l'effet collant ou la consistance.

## Revendications

1. Utilisation d'une poudre de sorbitol pour améliorer les propriétés organoleptiques d'une gomme à mâcher sans sucres **caractérisée en ce que** la poudre de sorbitol a une distribution de taille des particules, déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids.

2. Utilisation selon la revendication 1, **caractérisée en ce que** lesdites propriétés organoleptiques sont choisies parmi la dureté d'attaque, la texture, le goût sucré et/ou l'intensité aromatique.

3. Utilisation selon l'une ou l'autre des revendications 1 et 2, **caractérisée en ce que** la poudre de sorbitol a une distribution de taille des particules, comme suit:
- de 0 à 1% en poids, de particules > 400 microns,
- de 41 à 44% en poids, de particules comprises entre 250 et 400 microns,
- de 49 à 52% en poids, de particules comprises entre 100 et 250 microns,
- de 4 à 6% en poids, de particules comprises entre 75 et 100 microns et,
- de 0 à 1,5% en poids, de particules < 75 microns, dont la somme des différentes fractions étant de 100% en poids.

4. Utilisation selon l'une quelconque des revendications précédentes, **caractérisée en ce que** ladite poudre de sorbitol est obtenue par broyage et/ou tamisage du matériau sorbitol cristallin.

5. Méthode pour réduire la teneur en arôme d'une gomme à mâcher sans sucres comprenant les étapes consistant à :
- ajouter à une composition de gomme à mâcher au moins une poudre de sorbitol présentant une distribution de taille des particules, déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids, et
- obtenir de la gomme à mâcher.

6. Méthode selon la revendication 5, **caractérisée en ce que** la poudre de sorbitol ajoutée représente 5-85% en poids de la gomme à mâcher.

7. Méthode de production d'une gomme à mâcher sans sucres comprenant les étapes suivantes consistant à :
- mélanger une gomme base avec une poudre de sorbitol ayant une distribution de taille des particules, déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids,
- optionnellement, ajouter un agent plastifiant et/ou un arôme.

8. Gomme à mâcher sans sucres obtenue par la mise en oeuvre de la méthode selon la revendication 7.

9. Gomme à mâcher selon la revendication 8, **caractérisée en ce qu'**elle comprend 2 à 85% (w/w) de ladite poudre de sorbitol.

10. Poudre de sorbitol ayant une distribution de taille des particules, déterminée par analyse granulométrique, utilisant un équipement Retsch, comme suit:
- de 0 à 1% en poids, de particules > 400 microns,
- de 40 à 45% en poids, de particules comprises entre 250 et 400 microns,
- de 48 à 53% en poids, de particules comprises entre 100 et 250 microns,
- de 3,5 à 8% en poids, de particules comprises entre 75 et 100 microns et,
- de 0 à 2,5% en poids, de particules < 75 microns, dont la somme des différentes fractions étant de 100% en poids.

## Patentansprüche

1. Verwendung eines Sorbitpulvers zur Verbesserung der organoleptischen Eigenschaften eines zuckerfreien Kaugummis, **dadurch gekennzeichnet, dass** das Sorbitpulver eine mittels Partikelgrößenanalyse unter Verwendung einer Apparatur von Retsch bestimmte Partikelgrößenverteilung wie folgt aufweist:
- 0 bis 1 Gew.-% der Partikel > 400 µm,
- 40 bis 45 Gew.-% der Partikel zwischen 250 und 400 Mikron,
- 48 bis 53 Gew.-% der Partikel zwischen 100 und 250 Mikron,
- 3,5 bis 8 Gew.-% der Partikel zwischen 75 und 100 Mikron und
- 0 bis 2,5 Gew.-% der Partikel < 75 Mikron, wobei die Summe der verschiedenen Fraktionen 100 Gew.-% beträgt.

2. Verwendung nach Anspruch 1, **dadurch gekennzeichnet, dass** die organoleptischen Eigenschaften aus der Kauhärte, der Textur, dem süßen Geschmack und/oder der Aromaintensität ausgewählt sind.

3. Verwendung nach einem der Ansprüche 1 und 2, **dadurch gekennzeichnet, dass** das Sorbitpulver eine Partikelgrößenverteilung wie folgt aufweist:
- 0 bis 1 Gew.-% der Partikel > 400 Mikron,
- 41 bis 44 Gew.-% der Partikel zwischen 250 und 400 Mikron,
- 49 bis 52 Gew.-% der Partikel zwischen 100 und 250 Mikron,
- 4 bis 6 Gew.-% der Partikel zwischen 75 und 100 Mikron und
- 0 bis 1,5 Gew.-% der Partikel < 75 Mikron, wobei die Summe der verschiedenen Fraktionen 100 Gew.-% beträgt.

4. Verwendung nach einem der vorhergehenden Ansprüche, **dadurch gekennzeichnet, dass** das Sorbitpulver durch Zerkleinern und/oder Sieben von kristallinem Sorbitmaterial erhalten wird.

5. Verfahren zur Verringerung des Aromagehalts eines zuckerfreien Kaugummis, das die folgenden Schritte umfasst:
- Zugeben zu einer Kaugummizusammensetzung mindestens eines Sorbitpulvers, das eine mittels Partikelgrößenanalyse unter Verwendung einer Apparatur von Retsch bestimmte Partikelgrößenverteilung wie folgt aufweist:
- 0 bis 1 Gew.-% der Partikel > 400 Mikron,
- 40 bis 45 Gew.-% der Partikel zwischen 250 und 400 Mikron,
- 48 bis 53 Gew.-% der Partikel zwischen 100 und 250 Mikron,
- 3,5 bis 8 Gew.-% der Partikel zwischen 75 und 100 Mikron und
- 0 bis 2,5 Gew.-% der Partikel < 75 Mikron, wobei die Summe der verschiedenen Fraktionen 100 Gew.-% beträgt, und
- Erhalten des Kaugummis.

6. Verfahren nach Anspruch 5, **dadurch gekennzeichnet, dass** das zugegebene Sorbitpulver 5-85 Gew.-% des Kaugummis ausmacht.

7. Verfahren zur Herstellung eines zuckerfreien Kaugummis, das die folgenden Schritte umfasst:
- Mischen eines Basisgummis mit einem Sorbitpulver, das eine mittels Partikelgrößenanalyse unter Verwendung einer Apparatur von Retsch bestimmte Partikelgrößenverteilung wie folgt besitzt:
- 0 bis 1 Gew.-% der Partikel > 400 Mikron,
- 40 bis 45 Gew.-% der Partikel zwischen 250 und 400 Mikron,
- 48 bis 53 Gew.-% der Partikel zwischen 100 und 250 Mikron,
- 3,5 bis 8 Gew.-% der Partikel zwischen 75 und 100 Mikron und
- 0 bis 2,5 Gew.-% der Partikel < 75 Mikron, wobei die Summe der verschiedenen Fraktionen 100 Gew.-% beträgt,
- gegebenenfalls Zugeben eines Weichmachers und/oder eines Aromas.

8. Zuckerfreier Kaugummi, der mittels Durchführen des Verfahrens nach Anspruch 7 erhalten wird.

9. Kaugummi nach Anspruch 8, **dadurch gekennzeichnet, dass** er 2 bis 85% (w/w) des Sorbitpulvers umfasst.

10. Sorbitpulver, das eine mittels Partikelgrößenanalyse unter Verwendung einer Apparatur von Retsch bestimmte Partikelgrößenverteilung wie folgt besitzt:
- 0 bis 1 Gew.-% der Partikel > 400 Mikron,
- 40 bis 45 Gew.-% der Partikel zwischen 250 und 400 Mikron,
- 48 bis 53 Gew.-% der Partikel zwischen 100 und 250 Mikron,
- 3,5 bis 8 Gew.-% der Partikel zwischen 75 und 100 Mikron und
- 0 bis 2,5 Gew.-% der Partikel < 75 Mikron, wobei die Summe der verschiedenen Fraktionen 100 Gew.-% beträgt.

## Claims

1. Use of a sorbitol powder for improving the organoleptic properties of a sugar-free chewing gum, **characterized in that** the sorbitol powder has a particle size distribution, determined by particle size analysis using Retsch equipment, as follows:
- from 0 to 1% by weight of particles > 400 microns,
- from 40% to 45% by weight of particles between 250 and 400 microns,
- from 48% to 53% by weight of particles between 100 and 250 microns,
- from 3.5% to 8% by weight of particles between 75 and 100 microns, and
- from 0 to 2.5% by weight of particles < 75 microns, the sum of the various fractions of which being 100% by weight.

2. Use according to Claim 1, **characterized in that** said organoleptic properties are chosen from the initial bite, the texture, the sweet taste and/or the flavor intensity.

3. Use according to either of Claims 1 and 2, **characterized in that** the sorbitol powder has a particle size distribution as follows:
- from 0 to 1% by weight of particles > 400 microns,
- from 41% to 44% by weight of particles between 250 and 400 microns,
- from 49% to 52% by weight of particles between 100 and 250 microns,
- from 4% to 6% by weight of particles between 75 and 100 microns, and
- from 0 to 1.5% by weight of particles < 75 microns, the sum of the various fractions of which being 100% by weight.

4. Use according to any one of the preceding claims, **characterized in that** said sorbitol powder is obtained by milling and/or screening crystalline sorbitol material.

5. Method for reducing the content of flavoring of a sugar-free chewing gum, comprising the steps consisting in:
- adding to a chewing gum composition at least one sorbitol powder with a particle size distribution, determined by particle size analysis using Retsch equipment, as follows:
- from 0 to 1% by weight of particles> 400 microns,
- from 40% to 45% by weight of particles between 250 and 400 microns,
- from 48% to 53% by weight of particles between 100 and 250 microns,
- from 3.5% to 8% by weight of particles between 75 and 100 microns, and
- from 0 to 2.5% by weight of particles < 75 microns, the sum of the various fractions of which being 100% by weight, and
- obtaining chewing gum.

6. Method according to Claim 5, **characterized in that** the sorbitol powder added represents 5-85% by weight of the chewing gum.

7. Method for producing a sugar-free chewing gum, comprising the following steps consisting in:
- mixing a base gum with a sorbitol powder having a particle size distribution, determined by particle size analysis using Retsch equipment, as follows:
- from 0 to 1% by weight of particles > 400 microns,
- from 40% to 45% by weight of particles between 250 and 400 microns,
- from 48% to 53% by weight of particles between 100 and 250 microns,
- from 3.5% to 8% by weight of particles between 75 and 100 microns, and
- from 0 to 2.5% by weight of particles < 75 microns, the sum of the various fractions of which being 100% by weight,
- optionally, adding a plasticizer and/or a flavoring.

8. Sugar-free chewing gum obtained by performing the method according to Claim 7.

9. Chewing gum according to Claim 8, **characterized in that** it comprises 2% to 85% (w/w) of said sorbitol powder.

10. Sorbitol powder with a particle size distribution, determined by particle size analysis using Retsch equipment, as follows:
- from 0 to 1% by weight of particles > 400 microns,
- from 40% to 45% by weight of particles between 250 and 400 microns,
- from 48% to 53% by weight of particles between 100 and 250 microns,
- from 3.5% to 8% by weight of particles between 75 and 100 microns, and
- from 0 to 2.5% by weight of particles < 75 microns, the sum of the various fractions of which being 100% by weight.
